# EUROPEAN PATENT APPLICATION

(11) **EP 3 859 052 A1**
(43) Date of publication of application: **04.08.2021**
(21) Application number: 19866952.5
(22) Date of filing: 29.08.2019
(51) Int. Cl.: C25C 3/36, C25C 3/28, C25C 3/06

(54) **METHOD FOR PREPARING TITANIUM-ALUMINUM ALLOY**

(30) Priority: 30.09.2018 CN 201811157138
(71) Applicant: Chengdu Advanced Metal Material Industrial Technology Research Institute Co., Ltd., Chengdu, Sichuan 610306 (CN)
(72) Inventor: ZHU, Fuxing, Chengxiang Town, Qingbaijiang District Chengdu, Sichuan 610306 (CN); MA, Shangrun, Chengxiang Town, Qingbaijiang District Chengdu, Sichuan 610306 (CN)
(74) Representative: Gulde & Partner
(86) International application number: PCT/CN2019/103335
(87) International publication number: WO 2020/063247

(57) **Abstract**

The present invention belongs to the field of titanium metallurgy, and particularly relates to a method for preparing a titanium-aluminum alloy. The technical problem to be solved by the present invention is to provide a method for preparing a titanium-aluminum alloy, comprising the following steps: a. adding TiCl₄ and AlCl₃ to a molten electrolyte in a protective atmosphere, wherein the molten electrolyte is a mixture of at least one of alkali metal chloride or alkaline earth metal chloride and alkali metal fluoride; b. electrolyzing the mixture obtained in step a; and c. obtaining a titanium-aluminum alloy through vacuum distillation of a cathode product after electrolysis. The method of the present invention can shorten the preparation process of a titanium-aluminum alloy and reduce the manufacturing cost thereof, which is of great significance to the development of titanium alloy in practice.

## Description

### Field of the Invention

The present invention belongs to the field of titanium metallurgy, and particularly relates to a method for preparing a titanium-aluminum alloy.

### Background of the Invention

With the upgrading of aviation power plants, the internal environment temperature of aerospace engine gradually rises, and the nickel-based alloy that has already been mature and applied can no longer meet the working requirements at high temperature. Due to excellent high temperature and corrosion resistant properties, titanium-aluminum alloy can used as lightweight and high-strength structural parts in aerospace, automotive, and precision manufacturing fields instead of nickel-based alloys. Titanium-aluminum-based intermetallic compound has regular arrangement of atoms, strong metal bond and covalent bond binding force, light weight, high-temperature oxidation resistance and good creep resistance, making it a safe bet as the raw material of special coating with high temperature and corrosion resistant properties in demanding service conditions.

In the prior art, the methods for producing a titanium-aluminum alloy mainly include an aluminum powder thermal reduction process, a direct alloying process and an electro-deoxidation process, of which the direct alloying process is mainly used for producing a titanium-aluminum alloy in industry, and the preparation process comprises the steps of alloying, melting-solidification and heat treatment. However, the direct alloying process is tortuous and requires multiple smelting to eliminate the segregation of alloy elements, resulting in extremely high manufacturing cost of titanium-aluminum alloy, while the other two methods are facing a high-tech problem of impurity elements.

### Summary of the Invention

The technical problem to be solved by the present invention is to provide a method for preparing a titanium-aluminum alloy. The method comprises the following steps:
a. adding TiCl₄ and AlCl₃ to a molten electrolyte in a protective atmosphere, wherein the molten electrolyte is a mixture of at least one of alkali metal chloride or alkaline earth metal chloride and alkali metal fluoride;
b. electrolyzing the mixture obtained in step a; and
c. obtaining a titanium-aluminum alloy through vacuum distillation of a cathode product after electrolysis.

Specifically, in the step a of the method for preparing a titanium-aluminum alloy, the alkali metal chloride is at least one of LiCl, NaCl, KCl, RbCl or CsCl.

Specifically, in the step a of the method for preparing a titanium-aluminum alloy, the alkaline earth metal chloride is at least one of BeCl₂, MgCl₂, CaCl₂, BaCl₂ or SrCl₂.

Preferably, in the step a of the method for preparing a titanium-aluminum alloy, at least one of the alkali metal chloride or the alkaline earth metal chloride is any one of NaCl-KCl, LiCl-KCl or CaCl₂-NaCl.

Specifically, in the step a of the method for preparing a titanium-aluminum alloy, the alkali metal fluoride is at least one of LiF, NaF, KF, RbF or CsF.

Preferably, in the step a of the method for preparing a titanium-aluminum alloy, the alkali metal fluoride is NaF or KF.

Further, in the step a of the method for preparing a titanium-aluminum alloy, the amount of the alkali metal fluoride added is 10-90 wt% of the electrolyte.

Preferably, in the step a of the method for preparing a titanium-aluminum alloy, the amount of the alkali metal fluoride added is at least 6 times as much as the molar sum of Ti and Al in TiCl₄ and AlCl₃.

Preferably, in the step a of the method for preparing a titanium-aluminum alloy, the temperature of the molten electrolyte is higher than the melting point thereof. Further, the temperature of the molten electrolyte is 50-200 °C higher than the melting point thereof.

Specifically, in the step a of the method for preparing a titanium-aluminum alloy, the protective atmosphere is any one of argon, helium or neon, and preferably is argon.

Specifically, in the step b of the method for preparing a titanium-aluminum alloy, the anode of the electrolyte is graphite, and the cathode thereof is a conductive metal.

Preferably, in the step b of the method for preparing a titanium-aluminum alloy, the conductive metal is a material that is not alloyed with titanium or aluminum and has a melting point higher than that of the electrolyte. Further, the conductive metal is titanium-aluminum alloy or carbon steel.

Preferably, in the step b of the method for preparing a titanium-aluminum alloy, the electrolysis temperature is higher than the melting point of the electrolyte. Further, the electrolysis temperature is 50-200 °C higher than the melting point of the electrolyte.

Preferably, in the step b of the method for preparing a titanium-aluminum alloy, the electrolysis voltage is 3.1-3.2 V.

Specifically, in the step c of the method for preparing a titanium-aluminum alloy, the temperature of the vacuum distillation should be higher than the melting point of the substance with the highest melting point in the electrolyte.

Specifically, in the step c of the method for preparing a titanium-aluminum alloy, the vacuum degree of the vacuum distillation is less than 0.1 Pa.

Specifically, in the step c of the method for preparing a titanium-aluminum alloy, the end point of the vacuum distillation is continuously stable in vacuum for more than 5 h.

The present invention provides a method for preparing a titanium-aluminum alloy by a direct electrochemical reduction of TiCl₄ and AlCl₃, which shortens the preparation process of a titanium-aluminum alloy and reduce the manufacturing cost thereof compared with the traditional direct alloying process. Moreover, the method of the present invention avoids the problems of incomplete reduction and low electric energy efficiency existing in the direct electrochemical reduction of TiO₂ and Al₂O₃, and achieves continuous and stable operation, which has a good prospect of industrialization.

### Detailed Description of the Preferred Embodiments

The present invention provides a method for preparing a titanium-aluminum alloy, comprising the following steps:
(1) A mixture of TiCl₄ and AlCl₃ is directly introduced into a molten electrolyte system of alkali metal chloride or alkaline earth metal chloride and alkali metal fluoride in a protective atmosphere (the temperature of the molten electrolyte is higher than the melting point thereof, and preferably is 50-200 °C higher than the melting point thereof), wherein TiCl₄ and AlCl₃ react with alkali metal fluoride in the molten electrolyte, as shown in formula (1).

   TiCl₄ / AlCl₃ + MF → M₂TiF₆ /M₃AlF₆ +MCl (1)
(2) An electrolysis step is carried out by taking graphite as the anode and conductive metal as the cathode, wherein alkali metal fluorotitanate and alkali metal fluoroaluminate produced by the reaction of formula (1) react in the electrolysis process, as shown in formula (2).

   M₂TiCl₄ /M₂AlCl₃ + MCl → Ti - Al + Cl₂ (g) + MF (2)
(3) After the electrolysis, the cathode product is transferred to a vacuum furnace where the electrolyte is removed by distillation at high temperature and the vacuum degree is controlled to be less than 0.1 Pa.

Further, the ratio of TiCl₄ to AlCl₃ depends on a molar ratio according to the requirements for the titanium-aluminum alloy.

Further, the amount of alkali metal fluoride added should be sufficient to form fluorotitanate/fluoroaluminate. Preferably, the amount of alkali metal fluoride added is at least 6 times as much as the molar sum of Ti and Al in TiCl₄ and AlCl₃.

Further, the electrolysis temperature mainly depends on the melting point of the electrolyte, and varies with electrolytes. In most cases, the electrolysis temperature should be 50-200 °C higher than the melting point of molten salt. If the electrolysis temperature is too high, the electrolyte will become more volatile, resulting in a high loss. The electrolysis step proceeds at constant voltage to ensure that titanium and aluminum can be precipitated at the same time. Only metallic titanium is precipitated at low voltage, and alkali metal or alkaline earth metal may be precipitated at high voltage. So, the electrode voltage is preferably 3.1-3.2 V.

Further, after electrolysis, the cathode product of titanium-aluminum alloy entrains a large amount of electrolytes, including electrolyte components as well as newly generated alkali metal fluorotitanate and alkali metal fluoroaluminate with low solubility in an aqueous solution. Thus, the required titanium-aluminum alloy can be obtained by distillation. Due to high melting points of alkali metal fluorotitanate and alkali metal fluoroaluminate, the distillation temperature should be higher than their melting points.

According to the method of the present invention, the cathode product is a titanium-aluminum alloy, the anode product is chlorine, and the by-product is alkali metal fluoride after electrolysis. Therefore, the essence of the preparation method lies in directly preparing a titanium-aluminum alloy from TiCl₄ and AlCl₃.

### Embodiment 1

Adding a certain amount of NaCl and KCl in an equal molar ratio to a reaction vessel, adding NaF (accounting for 20 wt% of the total electrolyte), dehydrating in vacuum at 300 °C for 5 h, then heating to 750 °C in an argon atmosphere to melt the electrolyte. Slowly adding TiCl₄ and AlCl₃ with a mass ratio of 4:1 to the molten salt via a charging pipe, wherein the amount of TiCl₄ and AlCl₃ added was stoichiometrically calculated as per formula (1). Proceeding to the electrolysis step at a controlled voltage of 3.2 V by taking a graphite rod as the anode and a carbon steel rod as the cathode. After electrolysis, transferring the cathode product to a vacuum furnace, distilling for 6 h at the vacuum degree controlled to be less than 0.1 Pa and temperature of 1100 °C, cooling and taking out the product. The ICP analysis revealed that the content of Ti and Al in the product was 82.4 wt% and 16.6% respectively, close to 83.3 wt% and 16.7% when added. The product contained about 1% of impurities, mainly partial oxidation of the product and trace metal impurity elements. So, a titanium-aluminum alloy with this ratio was obtained.

### Embodiment 2

Adding a certain amount of NaCl and CaCl₂ in an equal molar ratio to a reaction vessel, adding KF (accounting for 30 wt% of the total electrolyte), dehydrating in vacuum at 300 °C for 5 h, then heating to 850 °C in a helium atmosphere to melt the electrolyte. Slowly adding TiCl₄ and AlCl₃ with a mass ratio of 1:1 to the molten salt via a charging pipe, wherein the amount of TiCl₄ and AlCl₃ added was stoichiometrically calculated as per formula (1). Proceeding to the electrolysis step at a controlled voltage of 3.1 V by taking a graphite rod as the anode and a carbon steel rod as the cathode, wherein the initial current density of cathode and anode was 0.2A/cm² and 0.25A/cm², respectively. After electrolysis, transferring the cathode product to a vacuum furnace, distilling for 6 h at the vacuum degree controlled to be less than 0.1 Pa and temperature of 1300 °C, cooling and taking out the product. The ICP analysis revealed that the content of Ti and Al in the product was 52.7 wt% and 47.0%, respectively, close to 56.0 wt% and 44.0% when added. The product contained about 0.3% of impurities, mainly partial oxidation of the product and trace metal impurity elements. So, a titanium-aluminum alloy with this ratio was obtained.

## Claims

1. A method for preparing a titanium-aluminum alloy, **characterized by** comprising the following steps:
a. adding TiCl₄ and AlCl₃ to a molten electrolyte in a protective atmosphere, wherein the molten electrolyte is a mixture of at least one of alkali metal chloride or alkaline earth metal chloride and alkali metal fluoride;
b. electrolyzing the mixture obtained in step a; and
c. obtaining a titanium-aluminum alloy through vacuum distillation of a cathode product after electrolysis.

2. The method for preparing a titanium-aluminum alloy according to claim 1, **characterized in that** the alkali metal chloride is at least one of LiCl, NaCl, KCl, RbCl or CsCl, and the alkaline earth metal chloride is at least one of BeCl₂, MgCl₂, CaCl₂, BaCl₂ or SrCl₂ in step a.

3. The method for preparing a titanium-aluminum alloy according to claim 1 or 2, **characterized in that** at least one of the alkali metal chloride or the alkaline earth metal chloride is any one of NaCl-KCl, LiCl-KCl or CaCl₂-NaCl in step a.

4. The method for preparing a titanium-aluminum alloy according to claim 1, **characterized in that** the alkali metal fluoride is at least one of LiF, NaF, KF, RbF or CsF in step a.

5. The method for preparing a titanium-aluminum alloy according to claim 1 or 4, **characterized in that** the alkali metal fluoride is NaF or KF in step a.

6. The method for preparing a titanium-aluminum alloy according to any one of claims 1 to 5, **characterized in that** the amount of the alkali metal fluoride added is 10-90 wt% of the electrolyte in step a.

7. The method for preparing a titanium-aluminum alloy according to any one of claims 1 to 5, **characterized in that** the amount of the alkali metal fluoride added is at least 6 times as much as the molar sum of Ti and Al in TiCl₄ and AlCl₃ in step a.

8. The method for preparing a titanium-aluminum alloy according to claim 1, **characterized in that** the protective atmosphere is any one of argon, helium or neon in step a.

9. The method for preparing a titanium-aluminum alloy according to claim 1 or 8, **characterized in that** the protective atmosphere is argon in step a.

10. The method for preparing a titanium-aluminum alloy according to claim 1, **characterized in that** the anode of the electrolyte is graphite, and the cathode thereof is a conductive metal in step b.

11. The method for preparing a titanium-aluminum alloy according to claim 10, **characterized in that** the conductive metal is a material that is not alloyed with titanium or aluminum and has a melting point higher than that of the electrolyte in step b.

12. The method for preparing a titanium-aluminum alloy according to claim 10 or 11, **characterized in that** the conductive metal is titanium-aluminum alloy or carbon steel in step b.

13. The method for preparing a titanium-aluminum alloy according to claim 1, **characterized in that** the electrolysis temperature is higher than the melting point of the electrolyte in step b.

14. The method for preparing a titanium-aluminum alloy according to claim 13, **characterized in that** the electrolysis temperature is 50-200 °C higher than the melting point of the electrolyte in step b.

15. The method for preparing a titanium-aluminum alloy according to claim 1, **characterized in that** the electrolysis voltage is 3.1-3.2 V in step b.

16. The method for preparing a titanium-aluminum alloy according to claim 1, **characterized in that** the temperature of the vacuum distillation should be higher than the melting point of the substance with the highest melting point in the electrolyte, the vacuum degree of the vacuum distillation is less than 0.1 Pa, and the end point of the vacuum distillation is continuously stable in vacuum for more than 5 h in step c.
